# EUROPÄISCHE PATENTSCHRIFT

(11) **EP 1 088 687 B1**
(45) Veröffentlichungstag und Bekanntmachung des Hinweises auf die Patenterteilung: **25.02.2004**
(21) Anmeldenummer: 00203386.8
(22) Anmeldetag: 28.09.2000
(51) Int. Cl.: B60G 11/46, B60G 11/113, B60G 7/04, B60G 9/00, B62D 61/12

(54) **Verbindung zwischen einer Radachse eines Fahrzeugs und einem die Radachse tragenden Tragarm**
Connection between a vehicle wheel axle and an arm bearing the wheel axle
Connexion entre un essieu de roue de véhicule et un bras de suspension portant l' essieu de roue

(30) Priorität: 29.09.1999 NL 1013172; 29.09.1999 NL 1013173
(43) Veröffentlichungstag der Anmeldung: 04.04.2001
(73) Patentinhaber: Weweler Nederland B.V., 7332 AP Apeldoorn (NL)
(72) Erfinder: Aalderink, Derk Geert, 7245 NV Laren (GLD) (NL)
(74) Vertreter: Iemenschot, Johannes Andreas, Ir.

(56) Entgegenhaltungen:
- EP-A- 0 247 284
- EP-A- 0 618 095
- EP-A- 0 810 109
- EP-A- 0 830 957
- EP-A- 0 943 529
- DE-A- 3 148 015
- DE-C- 4 224 965
- DE-U- 29 615 286
- US-A- 3 674 249
- US-A- 3 734 482
- US-A- 4 054 278
- US-A- 4 611 793
- US-A- 4 707 317
- PATENT ABSTRACTS OF JAPAN vol. 004, no. 147 (M-036), 16. Oktober 1980 (1980-10-16) & JP 55 099405 A (SHIN MEIWA IND CO LTD), 29. Juli 1980 (1980-07-29)

## Beschreibung

Die erfindung betrifft eine Verbindung zwischen einem Achskörper einer Radachse eines Fahrzeugs und einem sich in Längsrichtung des Fahrzeugs erstreckenden und den Achskörper im wesentlichen senkrecht kreuzenden Tragarm der Achse gemäß dem Oberbegriff de Anspruchs 1.

Eine derartige Verbindung ist aus dem DE 42 24 965 C bekannt. Diese bekannten Verbindung ist eine Verbindung zwischen einem Achskörper mit einem quadratischen Querschnitt und einem Tragarm. Die Stützplatte ist im Querschnitt U-förmig und umfaßt seitlich den Tragarm. Die Stützplatte ist in der Längsrichtung des Tragarms im wesenlichen gerade. Die Klemmittel umfassen zwei U-förmige Bügel die an beiden Seiten des Tragarms um de Achskörper herum angeordnet sind, und auf die freien, mit einem Schraubengewinde versehenen Endteile der U-förmigen Bügel aufgeschraubten Mutter, die die erfordeliche Klemmkraft liefern.

Die Aufgabe der vorliegenden Erfindung ist eine verbesserte Verbindung zu schaffen, die sehr stabil und einfach anzubringen ist.

Diese Aufgabe wird durch eine Verbindung mit den Merkmalen des Anspruchs 1 gelöst.

Die bevorzugten Ausbildungen der erfindungsgemäßen Verbindung sind in den Unteransprüchen 2 bis 16 festgelegt.

Die Erfindung bezieht sich ebenfalls auf ein Achssystem, in dem eine erfindungsgemäße Verbindung angewendet ist und ein mit einem derartigen Achssystem versehenes Fahrzeug.

Die Erfindung wird in dem nachfolgenden Ausführungsbeispiel anhand der Zeichnung erläutert werden, in der
- Fig. 1: perspektivisch ein Luftfedersystem für eine Radachse eines Fahrzeugs dargestellt ist, in dem die erfindungsgemäße Verbindung angewendet ist,
- Fig. 2: eine Seitenansicht des an einem Chassisbalken eines Fahrzeugs montierten Luftfedersystems der Fig. 1 ist, wobei die von dem Luftfedersystem getragene Achse sich in normaler Fahrhöhe befindet,
- Fig. 3: perspektivisch eine bei der erfindungsgemäßen Verbindung angewendete Stützplatte darstellt,
- Fig. 4: eine Ansicht gemäß Fig. 2 ist, wobei sich das Luftfedersytem in dem maximal komprimierten Zustand befindet,
- Fig. 5: eine Ansicht gemäß Fig. 4 ist, mit einer geänderten Ausführungsform der bei der erfindungsgemäβen Verbindung angewandten Stützplatte,
- Fig. 6: in Seitenansicht (Fig. 6a), Rückansicht (Fig. 6b) und Draufsicht, eine weitere Ausbildung der bei der erfindungsgemäßen Verbindung angewandten Stützplatte und mit dieser zusammenwirkende U-förmige Bügel darstellt,

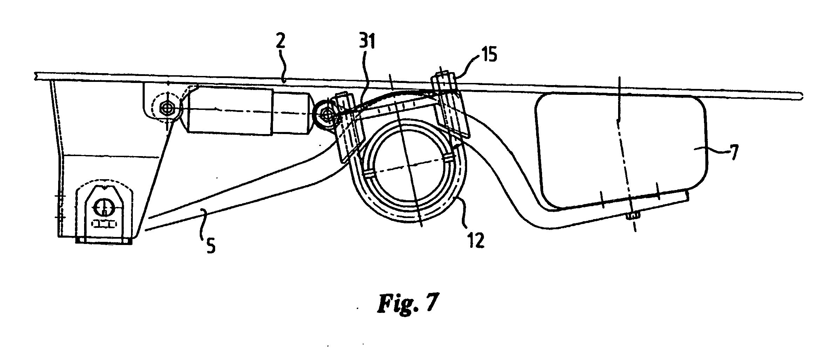

- Fig. 7: eine Ansicht gemäß Fig. 4 und 5, mit einer gemäß Fig. 6 ausgeführten Stützplatte ist,
- Fig. 8: ein Langsschnitt durch eine mögliche Befestigung des Stoßdämpfers an der Stützplatte ist, und
- Fig. 9: der Teil der Stützplatte mit Lippen zur Befestigung des Stoßdämpfers und ein Befestigungsbolzen darstellt.

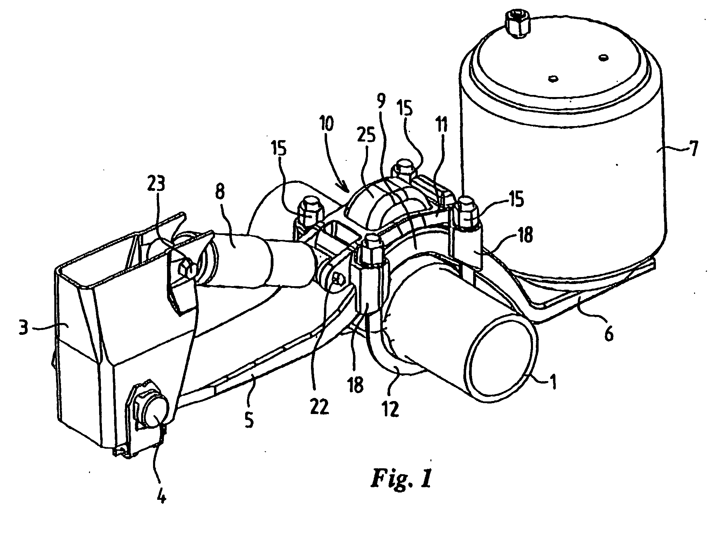

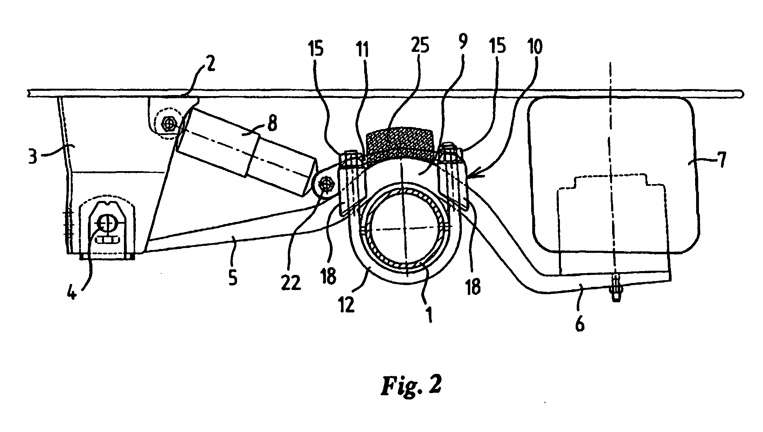

In den Fig. 1 und 2 ist perspektivisch, beziehungsweise in Seitenansicht ein Luftfedersystem für eine Radachse eines Fahrzeugs dargestellt, bei dem die Verbindung zwischen dem Achskörper der Radachse und dem Tragarm der Radachse gemäß der Erfindung ausgeführt ist.

In Fig. 1 und 2 ist der Achskörper der Radachse mit dem Bezugsziffer 1 angegeben. Das dargestellte Luftfedersystem umfaβt einen an einem Chassisbalken eines Fahrzeugs, der in Fig. 2 sehr schematisch angegeben ist und mit dem Bezugsziffer 2 angedeutet ist, zu befestigenden Tragbügel 3, einen an der Stelle eines Befestigungspunkts 4 gelenkig an dem Tragbügel 3 befestigten Tragarm 5, eine zwischen dem im Abstand zu dem Befestigungspunkt 4 liegenden freien Endteil 6 des Tragarms 5 und dem Chassisbalken 2 angeordnete Luftfeder 7 und einen zwischen dem Tragbügel 3 und dem Tragarm 5 angeordneten Stoβdämpfer 8.

Der Tragarm 5, der den Achskörper 1 im wesentlichen senkrecht kreuzt, hat an der Stelle des Achskörpers einen nach oben gekrümmten Teil 9. Der Achskörper 1 ist an der Unterseite des Tragarms in der Höhle des gekrümmten Teils 9 angeordnet und ist mittels einer hiernach noch näher zu beschreibenden erfindungsgemäßen Verbindung, die im allgemeinen mit dem Bezugsziffer 10 angedeutet ist, mit dem Tragarm 5 verbunden.

Das an der Unterseite des Tragarms 5 Anordnen des Achskörpers hat den Vorteil, daß Raum zum an dem Achskörper 1 Anordnen zum Beispiel eines Bremssystems geschaffen wird. Die Erfindung ist aber nicht auf ein System beschränkt, bei dem der Achskörper an der Unterseite des Tragarms angeordnet ist.

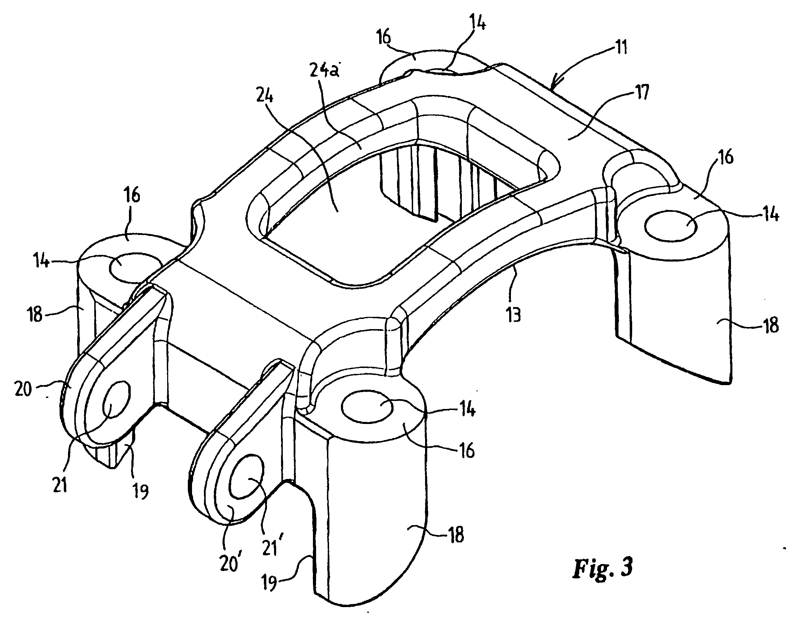

Die Verbindung 10 umfaßt eine speziell geformte Stützplatte (Spannplatte/Bridenplatte) 11, die in Fig. 3 in vergröβertem Maßstab dargestellt ist, und zwei allgemein übliche U-förmige Bügel (U-Bügel) 12, die mit der Stützplatte 11 zusammenwirken, und die Stützplatte 11, den Tragarm 5 und den Achskörper 1 fest miteinander verbinden.

Die Stützplatte ist an der Oberseite des Tragarms gegenüber dem Achskörper 1 angeordnet und hat an der dem Tragarm 5 zugekehrten Seite eine gebogene Form, die an die Form des gekrümmten Teils 9 des Tragarms angepaßt ist. Die U-förmigen Bügel 12 sind an beiden Seiten des Tragarms 5 um den Achskörper 1 herum angeordnet, mit den freien Endteilen nach oben gerichtet. Diese freien Endteile, die mit einem Schraubengewinde versehen sind, ragen durch Bohrungen 14 der Stützplatte 11. Auf die über die Stützplatte ragenden freien, mit einem Schraubengewinde versehenen Endteile des Bügels 12 sind Muttern 15 aufgeschraubt. Diese Muttern 15 stützen auf den Auflageflächen 16 an der Oberseite der Stützplatte 11 ab.

Die Bohrungen 14 in der Stützplatte 11 sind in sich ab einem über dem Tragarm 5 liegenden Mittelteil 17 der Stützplatte 11 an beiden Seiten neben dem Tragarm 5 erstreckenden hervorstehenden Teilen 18 der Stützplatte 11 angeordnet. Die Auflageflächen 16 für die Muttern 15 sind zumindestens teilweise obenauf den hervorstehenden Teilen 18 angeordnet und liegen in einer ersten Fläche, die an der dem Tragarm 5 zugekehrten Seite einer zweiten Fläche liegt, die parallel zu der ersten Fläche ist und die Oberseite des gekrümmten Teils 9 des Trägarms 5 berührt. Mit anderen Worten liegen die Auflageflächen unter der Oberseite des gekrümmten Teils 9 des Tragarms 5. Hierdurch liegen die Muttern 15 auf einer niedrigen Ebene und kann der Raum zwischen dem Tragarm 5 und dem über dem Tragarm 5 liegenden Chassisbalken 2 optimal als Federweg benutzt werden.

Der Abstand zwischen den dem Tragarm 5 zugekehrten Flächen zweier an beiden Seiten des Tragarms 5 liegender hervorstehender Teile 18 ist ein wenig größer als, oder gleicht im wesentlichen der Breite des Tragarms 5. Hierdurch und dadurch, daß die Form der Stützplatte 11 an der dem Tragarm zugekehrten Seite 13 an die Form der Oberseite des gekrümmten Teils 9 des Tragarms angepaßt ist, paßt die Stützplatte 11 ziemlich genau auf dem Tragarm 5.

Die hervorstehenden Teile 18 der Stützplatte 11 haben weiter eine derartige Form und sind in solcher Weise mit dem Mittelteil 17 der Stützplatte 11 verbunden, daß in dem Zustand, in dem die Muttern 15 nicht angezogen sind, die dem Tragarm 5 zugekehrten Flächen 19 der hervorstehenden Teile 18 in der Nähe der Oberseite des Tragarms 5 an dem Tragarm anliegen und ab dort in einem kleinen Winkel zu den Seitenflächen des Tragarms 5 stehen und die Auflageflächen 16 der Muttern 15 ab dem Mittelteil 17 der Stützplatte 11 zu den Seiten hin in im wesentlichen dem gleichen Winkel ansteigen und in dem Zustand, in dem die Muttern 15 angezogen sind, die dem Tragarm 5 zugekehrten Flächen 19 der hervorstehenden Teile 18 klemmend an den Seiten des Tragarms 5 anliegen. Da die Bohrungen 14 in den hervorstehenden Teilen 18 in solcher Weise angeordnet sind, daß die Bügel 12 an den Seiten des Tragarms 5 anliegen, wird nach dem Anziehen der Muttern eine sehr stabile und feste Verbindung zwischen dem Achskörper 1 und dem Tragarm 5 erhalten, wobei keine Momente in der Stützplatte 11 wirksam sind.

Der erwähnte kleine Winkel wird im allgemeinen ungefähr 1 bis 2° betragen.

In der dargestellten Ausführungsform ist die Stützplatte 11, insbesondere deren Mittelteil 17, an der dem Befestigungspunkt 4 des Tragarms 5 zugekehrten Seite mit zwei im Abstand zueinander liegenden Lippen 20, 20' versehen, die mit Löchern 21, 21' versehen sind. Diese Lippen dienen zur Befestigung des Stoßdämpfers 8 an der Stützplatte 11 mittels eines sich durch die Löcher 21, 21' erstreckenden Befestigungsbolzens 22 (sieh Fig. 1 und 2). Der Stoßdämpfer 8 ist an der anderen Seite mittels eines Befestigungsbolzens 23 (sieh Fig. 1 und 2) an dem Tragbügel 3 befestigt. Wie in Fig. 1 ersichtlich, ist der Stoßdämpfer 8 über dem Tragarm 5 montiert, wodurch wenig oder keine Momente in der Befestiging des Stoßdämpfers auftreten.

Die Lippen 20, 20' mit den Löchern 21, 21' sind in solcher Weise an dem Mittelteil 17 angeordnet, daß die Mittelachse der Löcher 21, 21' an der dem Tragarm 5 zugekehrten Seite der vorhergenannten, den gekrümmten Teil 9 berührenden zweiten Fläche liegt.

Vorzugsweise sind die Lippen 20, 20' mit den Löchern 21, 21' in solcher Weise angeordnet, daß der Befestigingsbolzen 22 gänzlich an der dem Tragarm 5 zugekehrten Seite der zweiten Fläche liegt. Der Befestigungsbolzen 22 liegt dann vollständig unter der Oberseite des gekrümmten Teils 9 des Tragarms 5.

In einer bevorzugten Ausführungsform ist der Befestigungsbolzen 22 ein Schraubenbolzen, der an einer Seite den Stoßdämpfer 8 fest mit einer 20 der Lippen 20, 20' verbindet und an der anderen Seite in dem Loch 21' der anderen Lippe 20' in radiale Richtung passend unterstützt wird, aber in axiale Richtung beweglich zu der betreffenden Lippe 20' ist. Hierdurch treten in den Lippen 20, 20' der Stützplatte 11 in Längsrichtung der Befestigungsbolzen 22 keine Biegemomente auf. Dies ist vor allem von Vorteil wenn der Stößdämpfer 8 mit Spiel zwischen den Lippen 20 aufgenommen ist und die Stützplatte 11 aus einem gegossenen Material besteht, wobei eine Verformung der Lippen 20, 20' zu einem Bruch dieser Lippen führen könnte.

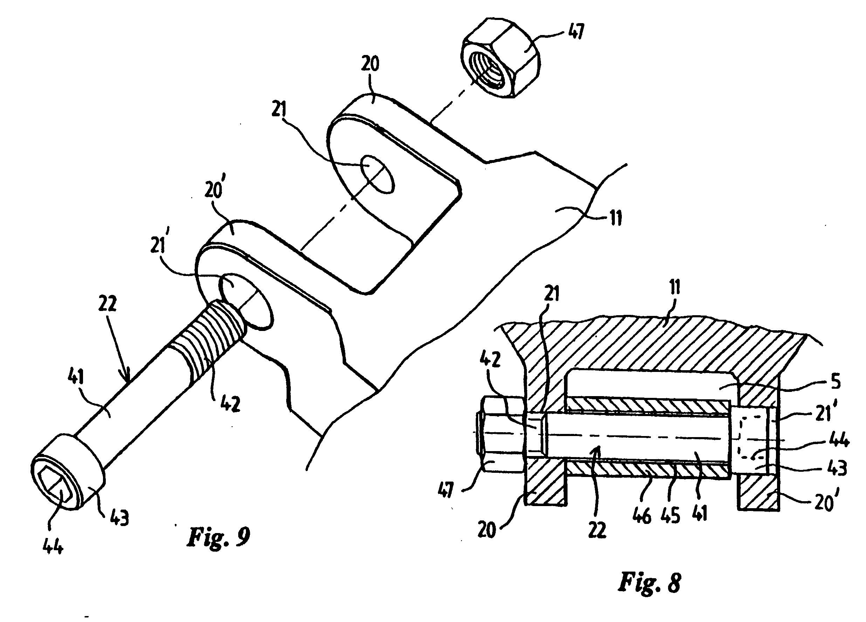

In fig. 8 und 9 is eine Möglichkeit für die Befestigung des Stößdampfers 8 an der Stützplatte 11 dargestellt.

Der Schraubenbolzen 22 hat einen Schacht 41, der am Ende mit einem Gewinde 42 versehen ist, und einem Kopf 43 der in der dargestellten Ausführungsform ein Zylinderkopf mit einem Hohlraum 44 ist, in den ein Sechskantschlüssel hineingesteckt werden kann. Der Schraubenbolzen 22 erstreckt sich durch eine Bohrung 45 in einem Befestigungsteil 46 des Stoßdämpfers. Auf das Gewinde 42 des Schraubenbolzens 22 ist eine Mutter 47 aufgeschraubt worden.

Der Befestigungsteil 46 des Stoßdämpfers 8 ist mit Hilfe des Schraubenbolzens 22 und der auf diesen aufgeschraubten Mutter 47 gegen die Lippe 20 geklemmt. Der Kopf 43 des Schraubenbolzens 22 ist in das Loch 21' in der Lippe 20' aufgenommen. Der Durchmesser des Loches 21' ist so, daß der Kopf 43 des Schraubenbolzens 22 in radiale Richtung unterstützt wird und in axiale Richtung zu der Lippe 20' verschieblich ist.

In Fig. 9 ist der Teil der Stützplatte 11 mit den Lippen 20 und 20', sowie dem Schraubenbolzen 22 und der Mutter 47 perspektivisch dargestellt.

Auch andere Ausführungsformen sind möglich. So kann der Schraubenbolzen 22 direkt in einer der beiden Lippen 20, 20' geschraubt werden, wobei das Loch in dieser Lippe dann ein Gewindeloch ist. Auch kann statt des Kopfes 43 der Schacht 41 des Schraubenbolzens 22 mittels einer Zwischenbüchse in dem Loch 21' der Lippe 20' unterstützt werden. Der Kopf 43, der auch ein Sechskantkopf sein kann, befindet sich dann an der Seite der Lippe 20 und der Mutter 47 an der Seite der Lippe 20 und der Mutter 47 an der Seite der Lippe 20'.

Die Befestigung des Stoßdämpfers 8 und dem Tragbügel 3 und die Befestigung des Tragarms 5 an dem Tragbügel 3 könnte auch auf die oben beschriebene Weise ausgeführt werden.

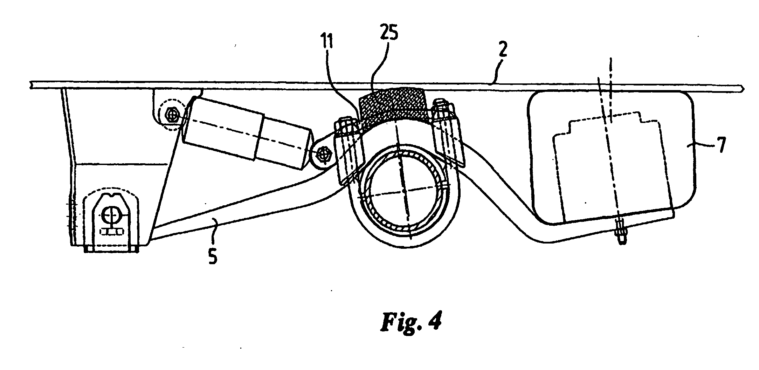

Die Stützplatte 11 ist in einem Mittelbereich über dem Tragarm 5 mit einer Aussparung 24 versehen (sieh Fig. 3), in der ein heraufragender flexibler Stoßblock 25 angeordnet werden kann (sieh Fig. 1 und 2). Dieser Stoßblock 25 dient bei einem maximal komprimierten Zustand des Luftfedersystems als ein Anschlag, der gegen den über dem Luftfedersytem liegenden Chassisbalken 2 stößt. Diese Situation ist in Fig. 4 dargestellt.

Die Aussparung 24 erstreckt sich vorzugsweise ab der dem Tragarm zugekehrten Seite 13 der Stützplatte 11 in Richtung auf die Oberseite der Stützplatte 11, wobei die Umfangswände 24a der Aussparung 24 sich nach oben hin verjüngen. Der Stoßblock 25 ist ebenfalls ein wenig verjüngt ausgeführt und sollte bei der Montage der Verbindung, bevor die Stützplatte 11 auf dem Tragarm 5 angeordnet wird, ab der Unterseite 13 der Stützplatte in die Aussparung gebracht werden. Nach der Montage ist der Stoßblock 25 dann fest in der Aussparung 24 befestigt.

Es wird deutlich sein, daß die Aussparung 24 auch anders ausgeführt sein kann, und daß der Stoßblock 25 in einer anderen Weise in der Aussparung 24 angeordnet werden kann.

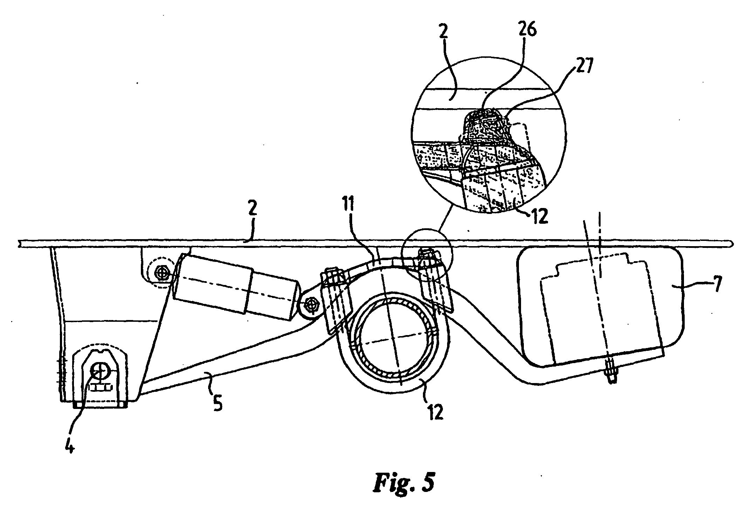

In einer weiteren, geringfügig anderen Ausführungsform kann die Stützplatte 11 an dem von dem Tragarm 5 abgekehrten Ende an der Oberseite mit einem erhöhten Teil 26 versehen sein, wie in Fig. 5 dargestellt ist. Dieser erhöhte Teil dient bei einem völlig komprimierten Zustand des Luftfedersystems als ein Anschlag, der gegen den über dem Luftfedersystem liegenden Chassisbalken 2 stößt und kann als Alternative zu dem flexiblen Stoßblock 25 dienen. Die Oberseite des erhöhten Teils 26 ragt vorzugsweise über die freien Enden 27 der U-förmigen Bügel 12 heraus, wodurch vorgebeugt wird, daß diese Enden, die mit einem Schraubengewinde versehen sind, gegen den Chassisbalken stößen und dadurch beschädigt werden.

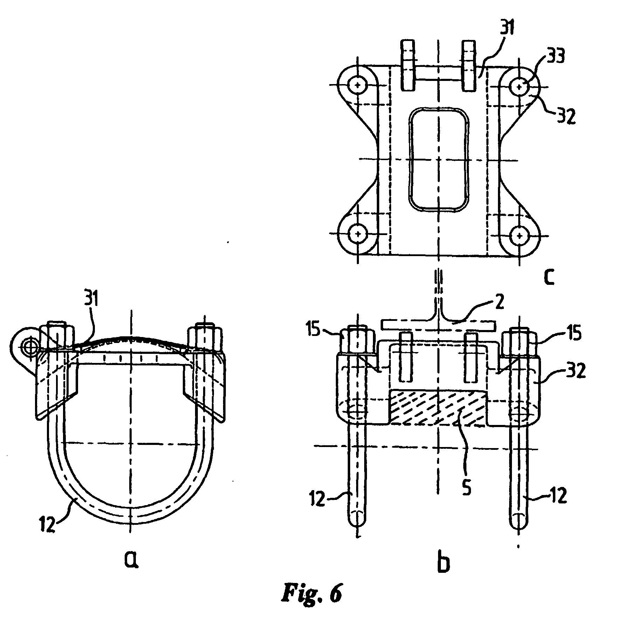

In Fig. 6 ist eine Seitenansicht (Fig. 6a), eine Rückansicht (Fig. 6b) und eine Draufsicht (Fig. 6c) einer leicht geänderten Ausführungsform einer Stützplatte 31 für die erfindungsgemäβe Verbindung dargestellt. In Fig. 6a und 6b sind ebenfalls die mit der Stützplatte 31 zusammenwirkenden U-förmigen Bügel 12 dargestellt. Der Unterschied mit der vorher beschriebenen Ausführungsform der Stützplatte 11 liegt darin, daß die hervorstehenden Teile 32 mit den in diesen angebrachten Bohrungen 33 eine solche Form haben, daß die an beiden Seiten des Tragarms 5 (in Fig. 6b mit unterbrochenen Linien angedeutet) liegenden U-förmigen Bügel 12 im Abstand zu den Seiten des Tragarms liegen. Vorzugsweise ist dabei der Abstand zwischen den an beiden Seiten des Tragarms 5 liegenden U-förmigen Bügeln 12 so, daß der Abstand zwischen den auf die Bügel 12 aufgeschraubten Muttern 15 quer zu der Längsrichtung des Tragarms 5 größer ist als die Breite eines über dem Tragarm 5 liegenden Chassisbalkens 2 des Fahrzeugs, an dem der Tragarm 5 befestigt ist, bzw. wird. Hierdurch ist es möglich, daß das Luftfedersystem noch weiter komprimieren kann, wobei in dem völlig kompromierten Zustand die Stützplatte 31 gegen den Chassisbalken 2 stößt, und die Muttern 15 auf den U-förmigen Bügeln 12 sich neben den Chassisbalken 2 legen (sieh auch Fig. 6b).

In der Zeichnung ist immer ein im Querschnitt runder Achskörper dargestellt. Die Erfindung ist hierauf jedoch nicht beschränkt. Der Achskörper würde auch eine andere Querschnittsform haben können, zum Beispiel quadratisch. Ein zwischen dem Achskörper und dem Tragarm angeordneter Teil kann dafür sorgen, daß der Achskörper in der richtigen Weise in der Höhle des gekrümmten Teils des Tragarms liegt.

Die erfindungsgemäße Verbindung wird insbesondere angewendet bei einem Achssystem für ein Fahrzeug, bei dem die Achse an beiden von einem obenbeschriebenen Luftfedersystem getragen wird, und wobei der Achskörper mit den an beiden Seiten des Fahrzeugs liegenden Tragarmen mittels der erfindungsgemäßen Verbindung verbunden ist.

Bei einem Fahrzeug, insbesondere einem Sattelanhänger eines Sattelschleppers, werden oft mehrere, zum Beipiel zwei oder drei, hintereinander angeordnete Achssysteme angewendet. Dabei ist es bevorzugt, daß zumindestens das in Fahrtrichtung gesehen hintere Achssystem mit Verbindungen versehen ist, bei denen ein flexibler Stoßblock 25 in der Stützplatte angeordnet ist. Oft werden von der Zugmaschine getrennte Sattelanhänger mit Hilfe eines speziellen Fahrzeugs transportiert, wobei der Sattelanhänger zur Rückseite hin nach unten neigt. Das hintere Achssystem wird dann zum größten Teil belastet werden, welches Achssystem dadurch mehr als die davor angeordneten Achssysteme komprimieren wird. Es ist deshalb wichtig, daß namentlich bei dem hinteren Achssystem gute Anschläge in der Form von flexiblen Stoßblöcken angewendet werden.

## Patentansprüche

1. Verbindung (10) zwischen einem Achskörper (1) einer Radachse eines Fahrzeugs und einem sich in Längsrichtung des Fahrzeugs erstreckenden und den Achskörper im wesentlichen senkrecht kreuzenden Tragarm (5) der Achse, wobei der Tragarm an der Seite des Achskörpers einen gekrümmten Teil (9) aufweist, der Achskörper an der Unterseite des Tragarms in der Höhle des gekrümmten Teils angeordnet ist, die Verbindung eine Stützplatte (11) umfaßt, die an der von dem Achskörper (1) abgekehrten Seite des Tragarms auf dem Tragarm angeordnet ist und zumindestens an der dem Tragarm zugekehrten Seite eine gebogene Form aufweist, und die Verbindung Klemmittel (12, 15) umfaßt, die die Stützplatte, den Tragarm und den Achskörper fest miteinander verbinden, **dadurch gekennzeichnet, daß** die Stützplatte zumindestens an der dem Tragarm zugekehrten Seite eine in der Längsrichtung des Tragarms gebogene Form aufweist, die an die Form des gekrümmten Teils des Tragarms angepaßt ist.

2. Verbindung nach Anspruch 1, wobei die Klemmittel zwei im wesentlichen U-förmige Bügel (12) umfassen, deren freie Enden mit einem Schraubengewinde versehen sind, wobei die U-förmigen Bügel an beiden Seiten des Tragarms (5) um den Achskörper (1) herum angeordnet sind und mit den freien Endteilen durch Bohrungen (14) in der Stützplatte (11) ragen und auf die aus der Stützplatte hervorstehenden Teile der freien Endteile der Bügeln Muttern (15) aufgeschraubt sind, die auf Auflageflächen (16) an der vom Tragarm abgewandten Seite der Stützplatte abstützen.

3. Verbindung nach Anspruch 2, bei der die Bohrungen (14) in der Stützplatte (11) in sich ab einem an einem gekrümmten Teil (9) des Tragarm (5) anliegenden Mittelteil (17) der Stützplatte an beiden Seiten neben dem Tragarm erstreckende hervorstehende Teile (18) der Stützplatte angebracht sind, und die Auflageflächen für die Muttern (15) zumindestens teilweise auf den hervorstehenden Teilen angeordnet sind.

4. Verbindung nach Anspruch 2 oder 3, bei der die Auflageflächen (16) für die Muttern (15) in einer ersten Fläche liegen, die an der dem Tragarm zugekehrten Seite einer zweiten Fläche liegt, die parallel zu der ersten Fläche ist und die vom Achskörper (1) abgekehrte Seite des gekrümmten Teils (9) des Tragarms berührt.

5. Verbindung nach Anspruch 3 oder 4, bei der in dem Zustand, in dem die Muttern (15) angezogen sind, die dem Tragarm (5) zugekehrten Flächen der hervorstehenden Teile (18) klemmend an den Seiten des Tragarms anliegen.

6. Verbindung nach einem der Ansprüche 3-5, bei der die hervorstehenden Teile (18) der Stützplatte (11) eine derartige Form haben und in solcher Weise mit dem Mittelteil (17) der Stützplatte (11) verbunden sind, daß in dem Zustand, in dem die Muttern (15) nicht angezogen sind, die dem Tragarm (5) zugekehrten Flächen der hervorstehenden Teile in der Nähe des Mittelteils der Stützplatte an dem Tragarm anliegen und ab dort in einem kleinen Winkel zu den Seitenflächen des Tragarms stehen, und die Auflageflächen (16) der Muttern (15) ab dem Mittelteil der Stützplatte zu den Seiten hin in im wesentlichen dem gleichen Winkel ansteigen.

7. Verbindung nach Anspruch 6, bei der der erwähnte kleine Winkel im allgemeinen ungefähr 1 bis 2° beträgt.

8. Verbindung nach einem der Ansprüche 1-6, bei dem, zum Zwecke der Befestigung eines Stoβdämpfers (8) an der Stützplatte (11) das Mittelteil (17) der Stützplatte an der dem Befestigungspunkt (4) des Tragarms (5) zugekehrten Seite mit zwei im Abstand zueinander liegenden und mit Löchern (21, 21') versehenen Lippen (20, 20') versehen ist.

9. Verbindung nach Anspruch 8, bei der die Mittelachse der Löcher (21, 21') in den Lippen (20, 20') an der dem Tragarm (5) zugekehrten Seite der den gekrümmten Teil (9) des Tragarms berührenden zweiten Fläche liegt.

10. Verbindung nach Anspruch 8 oder 9, bei der ein Stoβdämpfer (8) mit der Stützplatte (11) mittels eines sich durch die Löcher (21, 21') in den Lippen (20, 20') erstreckenden Schraubenbolzens (22) verbunden ist, der an einer Seite den Stoßdämpfer fest mit einer (20) der Lippen verbindet und an der anderen Seite in dem Loch (21') der anderen Lippe (20') in radiale Richtung passend unterstützt wird, aber in axiale Richtung zu der betreffenden Lippe beweglich ist.

11. Verbindung nach einem der Ansprüche 1-10, bei der die Stützplatte (11) in einem Mittelbereich über dem Tragarm mit einer Aussparung (24) versehen ist, in der ein aus der Stützplatte hervorstehender flexibler Stoβblock (25) angeordnet werden kann.

12. Verbindung nach Anspruch 10, bei der die Aussparung (24) sich durch die Stützplatte (11) erstreckt und die Umfangswände (2) der Aussparung sich in Richtung ab dem Tragarm (5) verjüngen.

13. Verbindung nach einem der Ansprüche 1-12, bei der die Stützplatte (11) in der Nähe des dem Befestigungspunkt (4) des Tragarms (5) abgekehrten Endes an der vom Tragarm abgekehrten Seite mit einem erhöhten Teil (26) versehen ist.

14. Verbindung nach Anspruch 13, bei der der erhöhte Teil (26) ab der Stützplatte weiter als die freien Enden (27) der U-förmigen Bügel (12) hervorsteht.

15. Verbindung nach einem der Ansprüche 1-14, bei der die an beiden Seiten des Tragarms (5) liegenden U-förmigen Bügel (12) im Abstand zu den Seiten des Tragarms liegen.

16. Verbindung nach Anspruch 15, bei der der Abstand zwischen den an beiden Seiten des Tragarms (5) liegenden U-förmigen Bügel (12) so ist, daß der Abstand zwischen auf die Bügel aufgeschraubten Muttern (15) quer zu der Längsrichtung des Tragarms gröβer ist als die Breite eines über dem Tragarm liegenden Chassisbalken (2) des Fahrzeugs, an dem der Tragarm befestigt ist, bzw. wird.

17. Achssystem für ein Fahrzeug, umfassend eine Radachse mit einem Achskörper (1), der von zwei im Abstand zueinander liegenden und den Achskörper im wesentlichen kreuzenden Tragarmen (5) getragen wird, wobei die Verbindung (10) zwischen dem Achskörper und jedem der beiden Tragarmen eine Verbindung nach einem der Ansprüche 1-16 ist.

18. Fahrzeug, das mit zumindestens einem Achssystem nach Anspruch 17 versehen ist.

19. Fahrzeug nach Anspruch 18, bei dem zumindestens das in Fahrtrichtung gesehen hintere Achssystem mit Verbindungen nach Anspruch 11 versehen ist, wobei in der Aussparung (24) ein flexibler Stoβblock (25) angeordnet ist.

## Claims

1. A connection (10) between an axle body (1) of a wheel axle of a motor vehicle and an axle carrier arm (5) which extends in the longitudinal direction of the vehicle and crosses the axle body substantially perpendicularly, the carrier arm having, on the axle body side, a curved part (9), the axle body being disposed at the underside of the carrier arm in the cavity of the curved part, the connection comprising a support plate (11) which is disposed on the carrier arm on the side thereof remote from the axle body (1) and having, at least at the side facing the carrier arm, a bent shape, and the connection comprising clamping means (12, 15) which rigidly interconnect the support plate, the carrier arm and the axle body, **characterised in that** the support plate has, at least on the side facing the carrier arm, a shape which is bent in the longitudinal direction of the carrier arm and which is adapted to the shape of the curved part of the carrier arm.

2. A connection according to claim 1, wherein the clamping means comprise two subtantially U-shaped yokes (12), the free ends of which are provided with a screwthread, the U-shaped yokes being disposed around the axle body (1) on both sides of the carrier arm (5) and projecting, by the free end parts, through bores (14) in the support plate (11) and nuts (15) are screwed on to those parts of the free end parts of the yokes which project from the support plate, said nuts (15) bearing on supporting surfaces (16) on the support plate side remote from the carrier arm.

3. A connection according to claim 2, wherein the bores (14) in the support plate (11) are disposed, in projecting parts (18) of the support plate which extend from a middle part (17) of the support plate bearing against a curved part (9) of the carrier arm (5), on both sides next to the carrier arm, and the supporting surfaces for the nuts (15) are disposed at least partially on the projecting parts.

4. A connection according to claim 2 or 3, wherein the supporting surfaces (16) for the nuts (15) are situated in a first plane which is situated on the side of a second plane facing the carrier arm, said second plane being parallel to the first plane and touching that side of the curved part (9) of the carrier arm which is remote from the axle body (1).

5. A connection according to claim 3 or 4, wherein, in the state in which the nuts (15) are tightened, those surfaces of the projecting parts (18) which face the carrier arm (5) bear clampingly against the sides of the carrier arm.

6. A connection according to any one of claims 3 to 5, wherein the projecting parts (18) of the support plate (11) have a shape such and are so connected to the middle part (17) of the support plate (11) that in the state in which the nuts (15) are not tightened those surfaces of the projecting parts which face the carrier arm (5) bear against the carrier arm in the vicinity of the middle part of the support plate and from thereon are at a small angle to the side surfaces of the carrier arm, and as from the middle part of the support plate the supporting surfaces (16) of the nuts (15) rise towards the sides at substantially the same angle.

7. A connection according to claim 6, wherein the said small angle is generally approximately 1 to 2°.

8. A connection according to any one of claims 1 to 6, wherein, for the purpose of fixing a shock absorber (18) on the support plate (11), the middle part (17) of the support plate is provided, on the side facing the fixing point (14) of the carrier arm (5), with two spaced apart lips (20, 20') provided with holes (21, 21').

9. A connection according to claim 8, wherein the middle axis of the holes (21, 21') in the lips (20, 20') is situated on that side of the second plane touching the curved part (9) of the carrier arm that faces the carrier arm (5).

10. A connection according to claim 8 or 9, wherein a shock absorber (8) is connected to the support plate (11) by means of a screw bolt (22) extending through the holes (21, 21') in the lips (20, 20'), said screw bolt on one side connecting the shock absorber rigidly to one (20) of the lips and on the other side being supported fitting in the hole (21') of the other lip (20') in the radial direction, but being movable relatively to the associated lip in the axial direction.

11. A connection according to any one of claims 1 to 10, wherein the support plate (11) is provided, in a middle zone above the carrier arm, with a recess (24) in which there can be disposed a flexible impact block (25) projecting from the support plate.

12. A connection according to claim 10, wherein the recess (24) extends through the support plate (11) and the peripheral walls (2) of the recess taper in the direction away from the carrier arm (5).

13. A connection according to any one of claims 1 to 12, wherein the support plate (11) is provided with an elevated part (26) at the side remote from the carrier arm in the vicinity of the end remote from the fixing point (4) of the carrier arm (5).

14. A connection according to claim 13, wherein the elevated part (26) projects as from the support plate further than the free ends (27) of the U-shaped yokes (12).

15. A connection according to any one of claims 1 to 14, wherein the U-shaped yokes (12) situated on both sides of the carrier arm (5) are spaced from the carrier arm sides.

16. A connection according to claim 15, wherein the distance between the U-shaped yokes (12) situated on both sides of the carrier arm (5) is such that the distance between nuts (15) screwed on to the yokes is greater, transversely of the longitudinal direction of the carrier arm, than the width of a chassis member (2) of the vehicle which is situated above the carrier arm and on which the carrier arm is or will be fixed.

17. An axle system for a vehicle, comprising a wheel axle with an axle body (1) which is carried by two spaced-apart carrier arms (5) substantially crossing the axle body, wherein the connection (10) between the axle body and each of the two carrier arms is a connection according to any one of claims 1 to 16.

18. A vehicle provided with at least one axle system according to claim 17.

19. A vehicle according to claim 18, wherein at least the rear axle system as considered in the direction of travel is provided with connections according to claim 11, a flexible impact block (25) being disposed in the recess (24).

## Revendications

1. Liaison (10) entre un corps d'essieu (1) d'un axe de roue d'un véhicule et un bras support (5) de l'essieu, s'étendant dans la direction longitudinale du véhicule et croisant le corps d'essieu de façon sensiblement perpendiculaire, le bras support présentant, sur le côté du corps d'essieu, une partie incurvée (9), le corps d'essieu étant disposé sur la face inférieure du bras support, dans la cavité de la partie incurvée, la liaison comprenant une plaque d'appui (11), disposée sur le bras support, sur le côté de bras support opposé au corps d'essieu (1), et présentant au moins une forme incurvée, sur le côté tourné vers le bras support, et la liaison comprenant des moyens de serrage (12, 15) reliant rigidement ensemble la plaque d'appui, le bras support et le corps d'essieu, **caractérisée en ce que** la plaque d'appui présente, au moins sur le côté tourné vers le bras support, une forme incurvée dans la direction longitudinale du bras support, forme adaptée à celle de la partie incurvée du bras support.

2. Liaison selon la revendication 1, les moyens de serrage comprenant deux étriers (12) sensiblement en forme de U, dont les extrémités libres sont munies d'un filetage hélicoïdal, les étriers en forme de U étant disposés sur les deux côtés du bras support (5), autour du corps d'essieu (1), et pénétrant, par les parties d'extrémité libres, à travers des perçages (14) ménagés dans la plaque d'appui (11), et des écrous (15) étant vissés sur les parties, ressortant de la plaque d'appui, des parties d'extrémité libres des étriers et prenant appui sur des faces de pose (16) se trouvant sur la face, opposée au bras support, de la plaque d'appui.

3. Liaison selon la revendication 2, dans laquelle les perçages (14) ménagés dans la plaque d'appui (11), sont ménagés dans des parties (18) en saillie de la plaque d'appui, s'étendant sur les deux côtés, à côté du bras de support, à partir d'une partie médiane (17), placée en appui sur une partie (9) incurvée du bras support (5), de la plaque d'appui, et les faces de pose prévues pour les écrous (15) étant disposés au moins partiellement sur les parties en saillie.

4. Liaison selon la revendication 2 ou 3, dans laquelle les faces de pose (16), prévues pour les écrous (15), sont situées dans un premier plan, située sur le côté, tourné vers le bras support d'un deuxième plan, qui est parallèle au premier plan et qui est en contact avec la face, opposée au corps d'essieu (1), de la partie incurvée (9) du bras support.

5. Liaison selon la revendication 3 ou 4, dans laquelle, à l'état dans lequel les écrous (15) sont serrés, les faces, tournées vers le bras de support (5), des parties (18) en saillie, sont en appui avec serrage sur les côtés du bras de support.

6. Liaison selon l'une des revendications 3 ou 5, dans laquelle les parties (18) en saillie de la plaque d'appui (11) ont une forme telle et sont reliées à la partie médiane (17) de la plaque d'appui (11) de telle façon, que, à l'état dans lequel les écrous (15) ne sont pas serrés, les faces, tournées vers le bras support (5), des parties en saillie appuient sur le bras support, à proximité de la partie médiane de la plaque d'appui et, à partir de là, sont orientées sous un petit angle par rapport aux faces latérales du bras support, et les faces de pose (16) des écrous (15), montent sensiblement sous le même angle, à partir de la partie médiane de la plaque d'appui, vers les côtés.

7. Liaison selon la revendication 6, dans laquelle le petit angle mentionné est en général d'une valeur d'à peu près 1 à 2°.

8. Liaison selon l'une des revendications 1 à 6, dans laquelle, aux fins de la fixation d'un amortisseur (8) sur la plaque d'appui (11), la partie médiane (17) de la plaque d'appui est munie, sur le côté, tournée vers le point de fixation (4) du bras support (5), de deux lèvres (20, 20'), disposées à distance l'une de l'autre et munies de trous (21, 21').

9. Liaison selon la revendication 8, dans laquelle l'axe médian des trous (21, 21') dans les lèvres (20, 20') est situé sur le côté, tourné vers le bras support (5), du deuxième plan, en contact avec la partie incurvée (9), du bras support.

10. Liaison selon la revendication 8 ou 9, dans laquelle un amortisseur (8) est relié à la plaque d'appui (11), à l'aide d'un boulon fileté (22) s'étendant à travers les trous (21, 21') ménagés dans les lèvres (20, 20'), boulons reliant, sur un côté rigidement, l'amortisseur à l'une (20) des lèvres, et, sur l'autre côté, étant soutenu de façon ajustée, en direction radiale, dans le trou (21') de l'autre lèvre (20'), mais étant mobile en direction axiale par rapport à la lèvre concernée.

11. Liaison selon l'une des revendications 1 à 10, dans laquelle la plaque d'appui (11) est munie dans une zone médiane, sur le bras support, d'un évidement (24) dans lequel un bloc de choc (25), flexible, en saillie depuis la plaque d'appui, peut être disposé.

12. Liaison selon la revendication 10, dans laquelle l'évidement (24) s'étend à travers la plaque d'appui (11) et les parois périphériques (2) de l'évidement vont en s'effilant, en s'éloignant du bras support (5).

13. Liaison selon l'une des revendications 1 à 12, dans laquelle la plaque d'appui (11), à proximité de l'extrémité opposée au point de fixation (4) du bras support (5), est munie d'une partie (26) en relief, sur le côté opposé au bras support.

14. Liaison selon la revendication 13, dans laquelle la partie (26) en relief ressort de la plaque d'appui, plus loin que les extrémités libres (27) de l'étrier (12) en forme de U.

15. Liaison selon l'une des revendications 1 à 14, dans laquelle les étriers (12) en forme de U, situés sur les deux côtés du bras support (5), sont disposés à distance des côtés du bras support.

16. Liaison selon la revendication 15, dans laquelle l'espacement entre les étriers (12) en forme de U, placés sur les deux côtés du bras support (5), est tel que l'espacement entre des écrous (15), vissés sur les étriers, tranversalement par rapport à la direction longitudinale du bras support, est supérieur à la largeur d'une poutre de châssis (2), placée sur le bras support, du véhicule, poutre sur laquelle le bras support est ou va être fixé.

17. Système d'essieu pour un véhicule comprenant un axe de roue avec un corps d'essieu (1), porté par deux bras support (5), placés à distance l'un de l'autre et croisant sensiblement le corps d'essieu, la liaison (10), entre le corps d'essieu et chacun des deux bras supports, étant une liaison selon l'une des revendications 1 à 16.

18. Véhicule muni d'au moins un système d'essieu selon la revendication 17.

19. Véhicule selon la revendication 18, dans lequel au moins le système d'essieu arrière, en observant dans la direction de roulage, est muni de liaisons selon la revendication 11, un bloc de choc (25) flexible étant disposé dans l'évidement (24).
